# DEMANDE DE BREVET EUROPEEN

(11) **EP 1 688 335 A1**
(43) Date de publication de la demande: **09.08.2006**
(21) Numéro de dépôt: 05290241.8
(22) Date de dépôt: 03.02.2005
(51) Int. Cl.: B62B 1/10, B62B 3/04

(54) **Chariot notamment pour randonneur**

(71) Demandeur: Bisch, Gilbert, 68440 Schlierbach (FR)
(72) Inventeur: Bisch, Gilbert, 68440 Schlierbach (FR)
(74) Mandataire: Nithardt, Roland

(57) **Abrégé**

La présente invention concerne un chariot pour randonneur facilitant le transport de personnes et/ou tout type de chargement, sur tout type de terrain, pouvant être tracté ou poussé, sans effort musculaire quelle que soit la charge, ergonomique.

Le chariot (1b) comporte un châssis (2b) porté à l'avant par un essieu d'axe E pourvu d'une roue (3) et à l'arrière par deux roues folles (30), un siège (10) réglable solidaire du châssis (2b) pour transporter une personne notamment à mobilité réduite, un timon (4) relié au châssis (2b) et prolongé par un guidon (51) permettant au randonneur de pousser le chariot. Ce chariot (1b) est asservi par des moyens de propulsion (6) et des moyens de freinage dont les organes de commande (63, 64) sont prévus sur le guidon (51) pour être accessibles au randonneur. Les moyens de propulsion (6) comportent notamment un moteur (60) disposé dans le moyeu de ladite roue (3) et alimenté par des batteries (61) et un module de pilotage (62).

Application : Transport de personnes à mobilité réduite et/ou de tout type de chargement pour la promenade et la randonnée.

## Description

La présente invention concerne un chariot notamment pour randonneur comportant un châssis porté par au moins un essieu d'axe E pourvu d'au moins une roue destinée à prendre appui sur le sol, au moins un timon relié audit châssis par une première extrémité et des premiers moyens de liaison, et des moyens de préhension reliés à la seconde extrémité dudit timon par des seconds moyens de liaison et agencés pour permettre audit randonneur de tracter ou de pousser ledit chariot.

Dans un premier domaine technique qui est celui de la randonnée pédestre, les randonneurs portent habituellement leur charge à bout de bras, en bandoulière ou sur le dos. Les sacs portés à bout de bras ne permettent pas le transport de charges lourdes. Les sacs portés en bandoulière déséquilibrent le corps et sont néfastes pour la colonne vertébrale ainsi que pour les muscles dorsaux et abdominaux. Les sacs portés sur le dos sont très pratiques et fréquemment utilisés notamment par les randonneurs, même pour transporter des enfants en bas âge. Leur utilisation nécessite néanmoins une bonne condition physique car tout le poids du chargement est porté par le randonneur. Les sacs et systèmes de portage existants ne permettent donc pas le transport de chargement lourd tout en limitant les efforts à fournir par le randonneur.

On connaît, par ailleurs, des brouettes et chariots traditionnels qui permettent de transporter des chargements lourds tout en limitant l'effort physique à fournir. Néanmoins, ils monopolisent les mains et sont donc totalement inadaptés pour les randonnées. De plus, l'effort à fournir pour les tracter ou les pousser est non négligeable surtout sur des circuits à forts dénivelés, aussi bien en descente où le randonneur doit le retenir, qu'en montée où le randonneur doit le pousser, ce qui limite leur intérêt et restreint leur possibilité d'utilisation.

Pour pallier une partie de ces inconvénients, les publications DE-U-20219321, US-A-5106108, US-A-5375861, US-A-6139033 et US-A-5769431 proposent des chariots prolongés par un timon articulé dont l'extrémité libre comporte un harnais ou une ceinture abdominale destiné à être porté par le randonneur. Ces chariots peuvent ainsi être utilisés sans les mains, sans toutefois limiter les efforts à fournir pour tracter ou pousser la charge, aucun dispositif n'étant prévu pour assister le randonneur.

Une autre solution est décrite dans la publication US-A-3989116 qui propose un chariot motorisé pour le golf, dont la conception est complexe, encombrante et onéreuse. Ce chariot est prévu pour être tracté par le golfeur au moyen d'une seule main, d'où un déséquilibrage possible, l'autre main devant tirer sur un câble relié à un module de régulation de vitesse de manière à adapter en permanence la vitesse du moteur à sa vitesse de déplacement. Cette solution n'est pas confortable et donc pas transposable pour la randonnée où la durée de marche est de plusieurs heures.

Dans un second domaine technique qui est celui du transport des personnes à mobilité réduite en chaise roulante, les randonnées pédestres sont difficilement possibles du fait de la conception de ces chaises roulantes qui ne permet pas de circuler sur des sentiers accidentés ou à fort dénivelé ou sur un terrain gras. Certaines solutions ont vu le jour sous la forme de chariots pliables portés par une roue centrale et manutentionnés par deux personnes, une à l'avant et une à l'arrière, la personne transportée étant assise au milieu. Ce chariot reste relativement lourd à manipuler, est encombrant, et impose obligatoirement deux accompagnateurs pour une personne à mobilité réduite, ce qui réduit considérablement les possibilités de sortie pour un grand nombre de personnes handicapées. La mise en place de la personne à transporter sur ce type de chariot n'est pas non plus facilitée et demande au moins deux accompagnateurs supplémentaires. De plus, ce chariot ne comporte aucun dispositif permettant de limiter les efforts à fournir par les accompagnateurs, qui doivent gérer et compenser simultanément le poids et l'équilibre du chariot et de la personne transportée. De ce fait, les promenades sont limitées en durée et en variété de terrain.

Aucune de ces différentes solutions n'est satisfaisante.

La présente invention vise à pallier ces inconvénients en proposant un chariot notamment pour randonneur, simple à fabriquer, économique, ergonomique et polyvalent, facilitant le transport de tout type de chargement, aussi bien du matériel qu'une personne adulte ou enfant, à mobilité réduite ou non, sur tout type de terrain, pouvant être aisément tracté, poussé ou freiné, en limitant les efforts musculaires à fournir aussi bien en montée qu'en descente, pour éviter la fatigue du randonneur.

Dans ce but, l'invention concerne un chariot notamment pour randonneur du genre indiqué en préambule, caractérisé en ce qu'il comporte des moyens de propulsion et des moyens de freinage couplés à ladite roue et agencés pour assister le randonneur, ces moyens de propulsion et de freinage étant couplés respectivement à des organes de commande à distance associés aux moyens de préhension pour être accessibles audit randonneur.

Dans une forme de réalisation préférée de l'invention, les moyens de propulsion comportent au moins un moteur logé dans le moyeu de la roue pour être en prise directe avec elle. Le châssis peut être porté par deux roues parallèles prévues sur un même essieu, un moteur étant logé dans le moyeu d'une des roues ou dans le moyeu de chacune des roues.

Le moteur est avantageusement un moteur électrique alimenté par des batteries et un module de pilotage prévus dans le châssis, les batteries pouvant être couplées à des cellules photovoltaïques disposées sur le chariot permettant leur rechargement en cours de randonnée.

Les moyens de freinage peuvent être choisis dans le groupe comprenant un frein à patins, un frein à disque, un frein à tambour, un frein hydraulique et les organes de commande à distance peuvent être choisis dans le groupe comprenant les poignées tournantes, les manettes, les boutons poussoirs, reliés au module de pilotage soit par une liaison mécanique, soit par ondes électromagnétiques.

Le châssis peut être au moins en partie abaissé par rapport à l'axe E de l'essieu de manière à rapprocher du sol le centre de gravité dudit chariot et assurer une plus grande stabilité du chargement. Il peut aussi être porté par au moins une roue supplémentaire d'axe distinct de l'axe E de l'essieu, cette roue étant folle autour de son axe vertical pour suivre la roue motrice.

Les premiers et/ou seconds moyens de liaison peuvent comporter des articulations agencées pour autoriser le mouvement relatif du châssis par rapport aux moyens de préhension lui permettant de suivre le dénivelé et les irrégularités du terrain sans pénaliser le randonneur, ces articulations étant choisies dans le groupe comprenant au moins une liaison pivot simple, une liaison pivot double, une liaison rotule, une liaison élastique.

De même, ces premiers et/ou seconds moyens de liaison peuvent être agencés pour relier respectivement le timon au châssis et les moyens de préhension au timon de manière amovible autorisant le démontage du chariot pour son transport dans un véhicule.

Le châssis peut également comporter une structure pliable dans son plan médian autorisant son transport dans un véhicule en position pliée.

Dans la forme de réalisation préférée, les moyens de préhension comportent au moins un guidon terminé par des poignées associées aux organes de commande des moyens de propulsion et de freinage. Ils peuvent comporter un équipement complémentaire choisi dans le groupe comprenant une ceinture abdominale, une plaque d'appui associée à des bretelles pour prendre appui sur le tronc du randonneur, un harnais, pour augmenter le confort du randonneur. Le chariot peut aussi comporter un deuxième timon relié au châssis à l'opposé du premier timon et couplé à des moyens de préhension complémentaires pour un deuxième randonneur.

Ce chariot peut avantageusement comporter des moyens d'amortissement agencés pour amortir les secousses liées aux irrégularités du terrain et aux variations d'allure notamment pour le transport des personnes. Il peut aussi comporter une béquille escamotable solidaire du châssis pour lui assurer une stabilité statique.

Selon les applications de l'invention, le châssis comporte un plateau fermé par des ridelles définissant un caisson, un plateau portant un siège monté sur un support, les moyens amortisseurs étant disposés entre ce support et le châssis, et des gouttières pour recevoir les jambes du passager, ou un plateau agencé pour recevoir une personne à mobilité réduite en fauteuil roulant, ce plateau étant prolongé par une rampe inclinée.

Le châssis peut également définir un fauteuil roulant, les moyens de préhension pouvant être fixés à l'avant ou à l'arrière dudit châssis. Dans ce cas, il comporte des butées agencées pour former des sécurités anti-basculement arrière du chariot.

Au moins le timon et/ou les moyens de préhension peuvent être agencés pour être réglables en longueur de manière à ajuster l'ergonomie du chariot au randonneur.

La présente invention et ses avantages apparaîtront mieux dans la description suivante de plusieurs modes de réalisation en référence aux dessins annexés, donnés à titre d'exemples non limitatifs, dans lesquels :
- la figure 1 est une vue de côté d'un chariot à tracter permettant le transport de matériel et/ou d'un enfant,
- la figure 2 est une vue de côté d'un chariot à pousser permettant le transport d'une personne à mobilité réduite, version promenade,
- la figure 3 est une vue similaire à la figure 2, le chariot étant déplacé par deux personnes, version sentier,
- la figure 4 est une vue de côté d'un chariot à pousser permettant le transport d'une personne à mobilité réduite avec son fauteuil roulant,
- la figure 5 est une vue de côté d'un chariot à tracter permettant le transport d'une personne à mobilité réduite en fauteuil roulant et
- la figure 6 est une vue similaire à la figure 5, le chariot étant poussé.

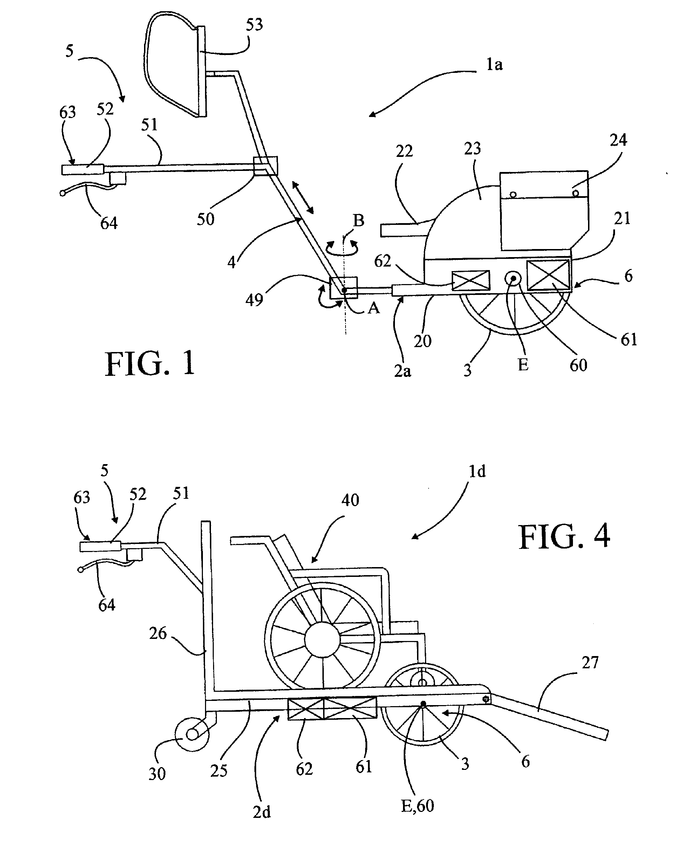

En référence à la figure 1, le chariot 1a selon l'invention est prévu pour être tracté par une seule personne et pour transporter des bagages, sacs à dos et autre matériel, ainsi qu'un enfant ou un bébé. Il comporte un châssis 2a porté par un essieu pourvu d'une roue 3 centrale reposant sur le sol. Ce chariot 1a est pourvu d'un timon 4 relié au châssis 2a en sa première extrémité par des premiers moyens de liaison 49 et prolongé par des moyens de préhension 5 en sa seconde extrémité par des seconds moyens de liaison 50 permettant sa manipulation. Il est complété par des moyens de propulsion 6 et des moyens de freinage (non représentée) couplés à la roue 3 et commandés respectivement par des organes de commande 63, 64 prévus au niveau des moyens de préhension 5 pour être accessibles par le randonneur au cours de la marche.

Le châssis 2a peut être formé d'une structure tubulaire en métal ou en aluminium, de tôles et/ou de grilles métalliques, de planches en bois, d'une combinaison de ces éléments ou de tout autre élément et matériau adaptés. La structure du châssis 2a peut être pliable ou non dans son plan médian pour faciliter son transport dans un véhicule. Dans cet exemple, le châssis 2a est formé d'un caisson en tôles d'aluminium comportant un plateau 20 plein, entouré en totalité ou en partie de ridelles 21par exemple assemblées par des charnières (non représentées) pour être pliables ou démontables de manière à faciliter le transport du chariot 1a. Le châssis 2a est porté par une roue centrale 3 guidée par un essieu d'axe E, le plateau 20 étant abaissé par rapport à cet axe E pour rapprocher du sol le centre de gravité et assurer une bonne stabilité du chariot 1a en charge. La roue 3 est protégée par un garde-boue 23 sur lequel peut être fixé un siège 22 pour le transport d'un enfant et des sacoches 24 latérales. Le siège 22 est de préférence articulé pour être escamotable ou démontable de manière à pouvoir utiliser tout le volume avant du caisson pour y mettre par exemple des sacs à dos et autre matériel qui peuvent être sécurisés au besoin par des sangles. Ce châssis 2a peut également comporter une zone d'attache (non représentée) pour fixer un parapluie ou une ombrelle escamotable ou démontable. Il peut aussi comporter une béquille (non représentée) escamotable permettant de le faire tenir au repos lorsqu'il n'est pas relié au randonneur.

Le timon 4 est par exemple réalisé en tubes ou en profilés métalliques, en bois, en matériaux synthétiques ou composites ou tout autre matériau adapté. Il peut être formé d'un tube central ou de deux tubes parallèles reliés entre eux par des traverses. Chaque tube peut être formé de deux ou de plusieurs tronçons télescopiques couplés à des moyens d'arrêt de manière à pouvoir ajuster sa longueur à la taille du randonneur.

La première extrémité du timon 4 est reliée au châssis 2a par l'intermédiaire de premiers moyens de liaison 49 et la seconde extrémité du timon 4 est reliée par des seconds moyens de liaison 50 aux moyens de préhension 5. Ces moyens de liaison 49, 50 peuvent être rigides. Ils peuvent aussi comporter des articulations définissant une liaison pivot d'axe A, une liaison pivot selon les axes A et B perpendiculaires, une liaison rotule ou une liaison élastique, dans le but d'autoriser le mouvement relatif du châssis 2a par rapport aux moyens de préhension 5 lui permettant, lorsqu'il est tracté ou poussé, de suivre les irrégularités et le relief du sol ainsi que les courbes de la trajectoire, sans risque de déséquilibrer ni de pénaliser le randonneur. Ces moyens de liaison 49, 50 sont également agencés pour permettre le montage et le démontage rapides, par exemple par emboîtement et verrouillage par bague de serrage ou autre, du timon 4 au châssis 2a et des moyens de préhension 5 au timon 4, de manière à pouvoir transporter le chariot la démonté dans un faible volume et notamment dans le coffre d'un véhicule.

Les moyens de préhension 5 comportent une ceinture abdominale 53 agencée pour être portée à la taille du randonneur lui permettant de tracter le chariot 1a. Cette ceinture abdominale 53 est fermée pour tout type d'attache rapide telle qu'un clip, un crochet, une bande de type velcro®, etc. Elle peut être réalisée en textile, en cuir ou en tout autre matériau adapté. Les moyens de préhension 5 comportent également un guidon 51 s'étendant de part et d'autre du tronc du randonneur terminé par des poignées 52 associées aux organes de commande 63, 64 des moyens de propulsion 6 et de freinage. Le support de la ceinture abdominale 53 et le guidon 51 peuvent être prévus réglables et/ou pliables et/ou démontables.

Les moyens de propulsion 6 comportent un moteur 60 logé dans le moyeu de la roue 3 de manière à l'entraîner en prise directe sans avoir besoin d'une transmission. Ce moteur 60 est de préférence un moteur électrique alimenté par des batteries 61 rechargeables prévues dans le châssis 2a, mais peut être aussi constitué de tout autre type de moteur tel qu'un moteur à essence. Il peut aussi être constitué d'un moteur extérieur au moyeu de la roue 3 et couplé à cette dernière par tout type de transmission à chaîne et pignons, à courroie et poulies, etc. ou agencé pour entraîner la roue 3 par un galet d'entraînement. Les batteries 61 sont soit rechargeables sur le secteur, soit couplées à des cellules photovoltaïques disposées sur un support couplé au châssis 2a et orientable en fonction du soleil de manière à les recharger pendant la marche. Ce moteur 60 est commandé par un module de pilotage 62 également disposé dans le châssis 2a et pourvu notamment d'un variateur de vitesse actionné à distance par une des poignées 52 mobile en rotation et identifiée 63, une manette, un bouton poussoir ou tout autre organe de commande adapté et relié au module de pilotage 62 par une liaison mécanique par câble, flexible, tringle, ou une liaison par ondes électromagnétiques ou tout autre moyen équivalent. Un bouton marche/arrêt (non représenté) pour la commande du moteur 60 peut également être prévu sur cette poignée 63. Les moyens de freinage (non représentés) comportent par exemple un frein à disque associé à la roue 3, ou tout autre type de frein à patins, à tambour, hydraulique ou pneumatique, actionné à distance par exemple par une manette 64 associée à une des poignées 52 et relié audit frein par un câble, un flexible, une tringle ou de tout autre moyen équivalent. Les moyens de propulsion 6 peuvent également être débrayés pour autoriser un fonctionnement en roue libre du chariot 1a.

Ainsi, le randonneur peut, tout en marchant, tracter le chariot 1a par sa taille, reposer ses avant-bras sur le guidon 51 et tenir les poignées 52 qui lui permettent de commander à sa guise la mise en marche et l'arrêt du moteur 60, l'accélération, la décélération et le freinage du chariot 1a, tout en maîtrisant l'équilibre du chariot 1a. Les moyens de propulsion 6 et de freinage améliorent donc considérablement le confort d'utilisation du chariot 1a. La propulsion du chariot 1a permet au randonneur de tracter sans effort des chargements lourds sur terrain plat et ascendant et l'assiste dans ses efforts. Le freinage permet au randonneur de freiner sans effort son chariot 1a, de retenir le randonneur lui-même dans les descentes et ainsi de ménager ses muscles et ses articulations, en particulier celles des genoux. Au final, l'endurance du randonneur est grandement améliorée quelle que soit la charge transportée.

Dans une variante non représentée, la ceinture abdominale 53 peut être remplacée par un harnais ou une plaque d'appui dorsal ou ventral associée à des bretelles pour être portée le randonneur selon qu'il tracte ou pousse le chariot la. Cette plaque d'appui (non représentée) peut être réalisée en bois, en matières synthétiques ou composites ou en toute autre matière similaire. Elle peut comporter des zones de rembourrage améliorant son confort. Elle est de préférence légère et aérée par des orifices ou tout autre moyen adapté pour limiter la transpiration. Cette plaque d'appui peut comporter des poches destinées à recevoir par exemple un parapluie, une trousse de première nécessité, une lampe torche, etc. Elle peut également comporter une zone d'attache pour fixer un parapluie et libérer les mains du randonneur.

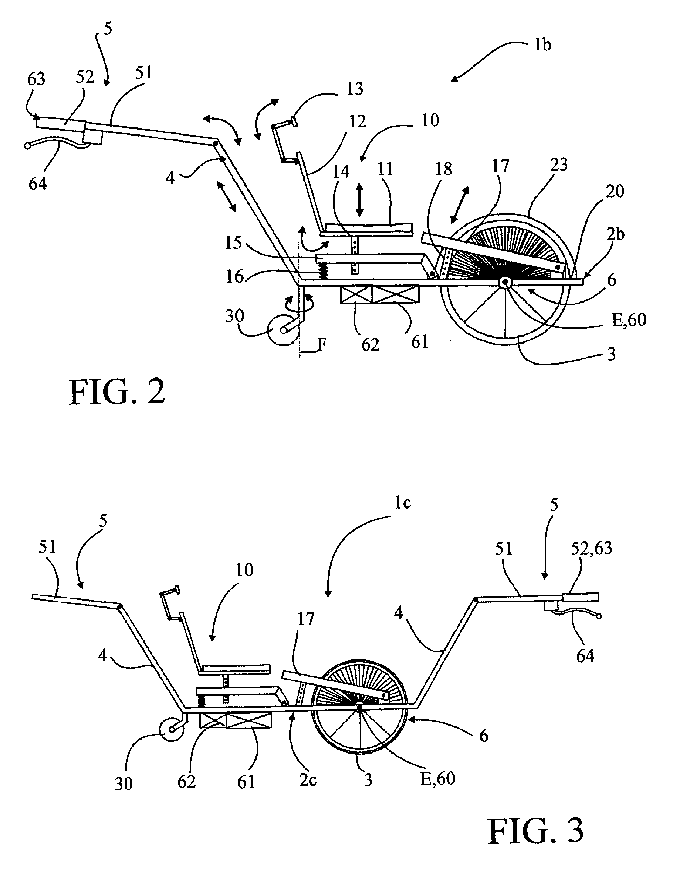

Le chariot 1b représenté à la figure 2 est prévu pour être poussé par une seule personne et transporter un passager, en l'occurrence une personne à mobilité réduite ou tout autre personne, par exemple un blessé suite à une chute ou une entorse, le passager étant assis sur un siège 10 fixé au châssis 2b. Il est basé sur le même principe technique que celui de la figure 1, les pièces qui sont similaires portent les mêmes numéros de référence et tous les détails techniques et variantes ne sont plus répétés.

Le châssis 2b est porté à l'avant par une roue centrale 3 protégée par un garde-boue 23 et guidée par un essieu d'axe E couplé directement à un moteur 60 et à l'arrière par deux roues folles 30 du type roues jockey pivotantes autour de leur axe vertical F, dont une au moins est équipé d'un frein de blocage par exemple à pied. Ainsi, le chariot 1b est en équilibre sur trois points disposés en triangle, le point central avant étant motorisé assurant la traction du chariot 1b. Le châssis 2b est couplé à un timon 4 prolongé par des moyens de préhension 5 sous la forme d'un guidon 51 pourvu de poignées 52 associées aux organes de commande 63, 64 des moyens de propulsion 6 et de freinage. Le randonneur est donc placé à l'arrière du chariot 1b, les mains posées sur les poignées 52. En cas de nécessité, un harnais peut être prévu en supplément pour solidariser le chariot 1b au torse du randonneur.

Le siège 10 est disposé sur le châssis 2b entre la roue centrale 3 et les roues folles 30 de manière que le centre de gravité du chariot 1b se situe dans le triangle de sustentation. Ce siège 10 comporte une assise 11, un dossier 12 et un repose-tête 13, l'inclinaison du dossier 12 et celle du repose-tête 13 pouvant être réglées par tout type d'articulation adéquat. L'assise 11 est réglable en hauteur et pivotante pour permettre de charger la personne à transporter sur le côté du chariot 1b. Pour ce faire, l'assise 12 est portée par un tube 14 associé à une butée à billes, ce tube coulissant dans un fourreau et bloqué axialement par une goupille, le fourreau étant solidaire d'un support 15 articulé sur le châssis 2b. Bien entendu, d'autres moyens équivalents peuvent également convenir, comme un système pignon/crémaillère. Afin de limiter l'impact des secousses liées aux irrégularités du terrain et aux variations d'allure, le confort du passager est assuré par un ou plusieurs amortisseurs 16 prévus entre le support 15 et le châssis 2b. Ces amortisseurs 16 sont de préférence réglables en fonction du poids du passager par exemple de 60 à 100 kg et peuvent être des amortisseurs à ressort, des pistons à gaz ou hydrauliques, ou tout autre type existant. Le châssis 2b porte également deux gouttières 17 prévues de chaque côté de la roue centrale 3 pour permettre au passager d'y reposer ses jambes. Ces gouttières 17 sont fixées au châssis 2b par une articulation à l'extrémité avant et par des moyens de réglage 18 en hauteur à l'extrémité arrière par exemple sous la forme d'un profilé perforé et d'une goupille.

Ce chariot 1b est parfaitement étudié pour la promenade et la randonnée sur tous les chemins en plaine et moyenne montagne. Pour une randonnée sur des sentiers escarpés et en haute montage, le chariot 1c de la figure 3 sera plus approprié. Ce chariot 1c correspond sensiblement au chariot 1b de la figure 2, sauf qu'il est prévu pour être déplacé par deux personnes, une à l'avant qui tracte et dirige et l'autre à l'arrière qui accompagne et corrige l'équilibre. Dans cette réalisation, le châssis 2c est porté par une roue centrale 3 à l'avant et une seule roue folle 30 à l'arrière. Ce châssis 2c est couplé à deux timons 4 prévus respectivement à l'avant et à l'arrière portant chacun des moyens de préhension 5. Seuls les moyens de préhension 5 à l'avant peuvent être prévus des organes de commande 63, 64 des moyens de propulsion 6 et de freinage. Le timon 4 prévu à l'arrière peut être couplé au châssis 2c par une articulation d'axe vertical permettant au chariot 1c de suivre des courbes serrées sans danger ni pour le passager, ni pour les randonneurs.

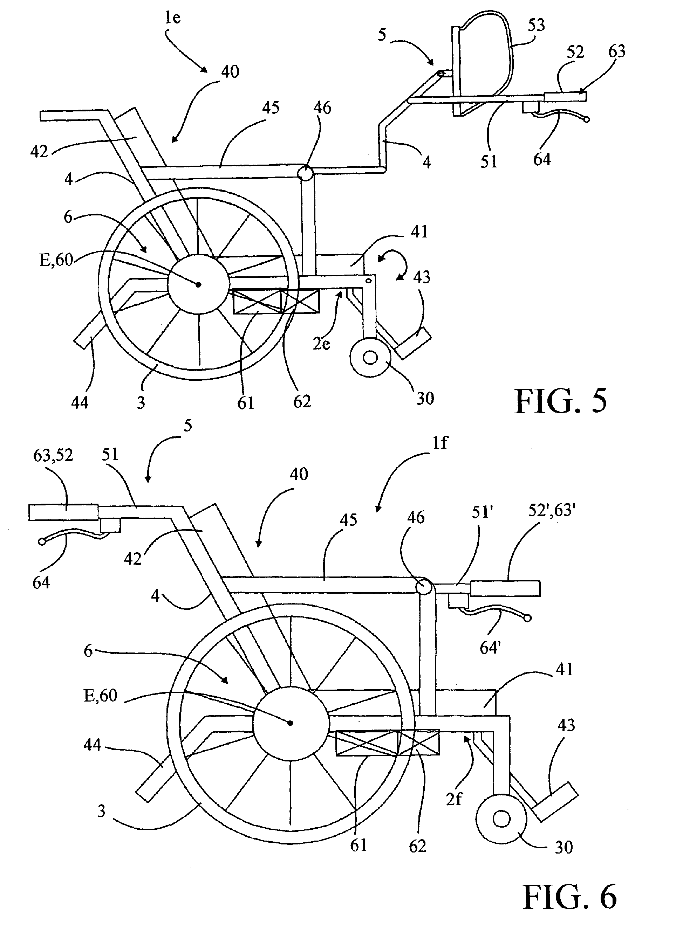

La figure 4 illustre un chariot 1d selon l'invention qui est prévu pour être poussé par une seule personne et pour transporter une personne à mobilité réduite avec son fauteuil roulant 40, limitant ainsi considérablement les manipulations de cette personne avec tous les risques de chute et de désagréments qu'elles comportent. Dans ce cas, le châssis 2d est constitué d'un plateau 25 plein porté par une roue centrale 3 à l'avant et deux roues folles 30 à l'arrière dont une au moins est équipée d'un frein de blocage. La roue centrale 3 est portée par un essieu d'axe E comprenant le moteur 60. Il comporte à l'arrière un dos 26 sensiblement vertical couplé à des moyens de préhension 5 constitués d'un guidon 51 terminé par des poignées 52 associés aux organes de commande 63, 64 des moyens de propulsion 6 et de freinage. Il est prolongé à l'avant par une rampe inclinée 27 escamotable. Cette rampe inclinée 27 permet de monter la personne dans son fauteuil roulant 40 sur le plateau 25. Elle est ensuite escamotée, soit en étant rabattue sur un des côtés, soit en étant démontée et glissée sous ou sur le côté du chariot 1d. Bien entendu, des sécurités (non représentées) sont prévues pour solidariser le fauteuil roulant 40 au chariot 1d comme des sangles tendues entre les roues du fauteuil roulant 40 et le dos 26 du châssis 2d, des sabots escamotables bloquant les roues du fauteuil roulant 40 de part et d'autre, une butée avant escamotable et réglage pour s'adapter à la profondeur du fauteuil roulant 40, etc.

Les figures 5 et 6 illustrent chacune un chariot 1e, 1f selon l'invention sous la forme d'un fauteuil roulant. Le châssis 2e, 2f forme une assise 41 et est prolongé à l'arrière par un dossier 42 pouvant être articulé par rapport à l'assise 41 de manière à régler son inclinaison. Ce châssis 2e, 2f est porté par deux grandes roues 3 à l'arrière et deux petites roues folles 30 à l'avant lui assurant sa stabilité, dont une au moins est équipée d'un frein de blocage. Les deux grandes roues 3 sont portées par un même essieu d'axe E dans lequel est intégré le moteur 60, si le chariot 1e, 1f n'est pas pliable. A l'inverse, si le chariot 1e, 1f est pliable dans son plan médian pour faciliter son transport dans un véhicule, chaque roue 3 a son propre essieu d'axe E et son propre moteur 60. Les batteries 61 et le module de pilotage 62 peuvent être placés sous le châssis 2e, 2f. Dans le chariot 1e de la figure 5, les petites roues 30 sont rabattables, escamotables ou démontables en mode randonnée pour ne pas gêner sa traction. Le châssis 2e, 2f est prolongé à l'avant par des reposes pieds 43 et à l'arrière par des butées 44 formant des sécurités anti-basculement arrière, ces reposes pieds 43 et ces butées 44 pouvant être réglables et/ou amovibles par tout moyen connu. Le châssis 2e, 2f est complété par des accoudoirs 45 reliés à l'avant par une traverse 46 amovible pour permettre au passager de prendre place dans le chariot 1e, 1f et formant une sécurité pour le passager en mode randonnée.

Le chariot le prévu pour être tracté comporte un timon 4 fixé à l'avant sur la traverse 46 prolongé par des moyens de préhension 5 formés d'une ceinture abdominale 53 et d'un guidon 51. Ce guidon 51 porte des poignées 52 associées aux organes de commande 63, 64 des moyens de propulsion 6 et de freinage. Dans le chariot 1f prévu pour être poussé, le timon 4 est constitué du dossier 42 et est prolongé par des moyens de préhension 5 en forme de guidon 51 terminé par des poignées 52 associées aux organes de commande 63, 64 des moyens de propulsion 6 et de freinage. Ce chariot 1f comporte un deuxième jeu d'organes de commande 63', 64' associé à un guidon 51' et des poignées 52' et prévu à l'avant en prolongement des accoudoirs 45 pour être accessible au passager lui-même. Le passager peut ainsi être autonome pour effectuer certains déplacements. En mode randonnée, le randonneur peut à l'aide d'un bouton inverseur (non représenté) donner la priorité aux organes de commande 63, 64 qui lui sont accessibles. Ces deux modèles de chariot 1e, 1f comportent bien entendu une base standard, les moyens de préhension 5 pouvant être placés au choix à l'avant ou à l'arrière.

La description met bien en évidence que le chariot 1a-f selon l'invention permet au randonneur de transporter une personne à mobilité réduite ainsi que tout type de chargement lourd (sac à dos, tente, nourriture, enfant, etc.) tout en soulageant considérablement les articulations, la colonne vertébrale, en limitant les efforts musculaires et respiratoires à fournir pendant la randonnée, en garantissant une position ergonomique du corps du randonneur.

La présente invention n'est pas limitée aux exemples de réalisation décrits mais s'étend à toute modification et variante évidentes pour un homme du métier tout en restant dans l'étendue de la protection définie dans les revendications annexées.

## Revendications

1. Chariot (1a-f) notamment pour randonneur comportant un châssis (2a-f) porté par au moins un essieu d'axe E pourvu d'au moins une roue (3) destinée à prendre appui sur le sol, au moins un timon (4) relié audit châssis (2a-f) par une première extrémité et des premiers moyens de liaison (49), des moyens de préhension (5) reliés à la seconde extrémité dudit timon (4) par des seconds moyens de liaison (50) et agencés pour permettre au randonneur de tracter ou de pousser ledit chariot (1a-1f), **caractérisé en ce qu'**il comporte des moyens de propulsion (6) et des moyens de freinage couplés à ladite roue (3) et agencés pour assister le randonneur, ces moyens de propulsion (6) et de freinage étant couplés respectivement à des organes de commande à distance (63, 64) associés aux moyens de préhension (5) pour être accessibles par ledit randonneur.

2. Chariot selon la revendication 1, **caractérisé en ce que** lesdits moyens de propulsion (6) comportent au moins un moteur (60) logé dans le moyeu de ladite roue (3) pour être en prise directe avec elle.

3. Chariot selon la revendication 2, **caractérisé en ce que** ledit châssis (2e,2f) est porté par un essieu d'axe E pourvu d'au moins deux roues (3) parallèles, ledit moteur (60) étant logé dans le moyeu d'un desdites roues (3).

4. Chariot selon la revendication 2, **caractérisé en ce que** ledit châssis (2e,2f) est porté par un essieu d'axe E pourvu d'au moins deux roues (3) parallèles, un moteur (60) étant logé dans le moyeu de chacune desdites roues (3).

5. Chariot selon la revendication 2, **caractérisé en ce que** le moteur (60) est un moteur électrique alimenté par des batteries (61) et un module de pilotage (62) prévus dans le châssis (2a-2f).

6. Chariot selon la revendication 5, **caractérisé en ce que** lesdites batteries (61) sont couplées à des cellules photovoltaïques disposées sur ledit chariot (1a-1f).

7. Chariot selon la revendication 1, **caractérisé en ce que** les moyens de freinage sont choisis dans le groupe comprenant un frein à patins, un frein à tambour, un frein à disque, un frein hydraulique.

8. Chariot selon la revendication 2, **caractérisé en ce que** les organes de commande à distance sont choisis dans le groupe comprenant les poignées tournantes (63), les manettes (64), les boutons poussoirs, reliés audit module de pilotage (62) par une liaison mécanique ou par ondes électromagnétiques.

9. Chariot selon la revendication 1, **caractérisé en ce que** ledit châssis (2a) est au moins en partie abaissé par rapport à l'axe E de l'essieu de manière à rapprocher du sol le centre de gravité dudit chariot (1a).

10. Chariot selon la revendication 1, **caractérisé en ce que** ledit châssis (2b-2f) est porté par au moins une roue (30) supplémentaire d'axe distinct de l'axe E de l'essieu, cette roue (30) étant folle autour de son axe vertical (F).

11. Chariot selon la revendication 1, **caractérisé en ce que** les premiers et/ou seconds moyens de liaison (49, 50) comportent des articulations agencées pour autoriser le mouvement relatif dudit châssis (2a-f) par rapport auxdits moyens de préhension (5) lui permettant de suivre le dénivelé et les irrégularités du terrain sans pénaliser le randonneur.

12. Chariot selon la revendication 11, **caractérisé en ce que** lesdites articulations sont choisies dans le groupe comprenant au moins une liaison pivot simple, une liaison pivot double, une liaison rotule, une liaison élastique.

13. Chariot selon la revendication 1, **caractérisé en ce que** les premiers et/ou seconds moyens de liaison (49, 50) sont agencés pour relier respectivement le timon (4) au châssis (2a-2f) et les moyens de préhension (5) au timon (4) de manière amovible autorisant le démontage du chariot (1a-1f) pour son transport dans un véhicule.

14. Chariot selon la revendication 1, **caractérisé en ce que** ledit châssis (2a-2f) comporte une structure pliable dans son plan médian autorisant son transport dans un véhicule en position pliée.

15. Chariot selon la revendication 1, **caractérisé en ce que** lesdits moyens de préhension (5) comportent au moins un guidon (51) terminé par des poignées (52) associées auxdits organes de commande (63, 64).

16. Chariot selon la revendication 15, **caractérisé en ce que** lesdits moyens de préhension (5) comportent un équipement complémentaire choisi dans le groupe comprenant une ceinture abdominale (53), une plaque d'appui associée à des bretelles pour prendre appui sur le tronc du randonneur, un harnais.

17. Chariot selon la revendication 1, **caractérisé en ce qu'**il comporte un deuxième timon (4) relié audit châssis (2c) à l'opposé du premier timon (4) et couplé à des moyens de préhension (5) complémentaires pour un deuxième randonneur.

18. Chariot selon la revendication 1, **caractérisé en ce qu'**il comporte des moyens d'amortissement (16) agencés pour amortir les secousses liées aux irrégularités du terrain et aux variations d'allure.

19. Chariot selon la revendication 1, **caractérisé en ce qu'**il comporte une béquille escamotable solidaire dudit châssis (2a, 2c).

20. Chariot (1a) selon la revendication 1, **caractérisé en ce que** ledit châssis (2a) comporte un plateau (20) fermé par des ridelles (21) définissant un caisson.

21. Chariot (1b,1c) selon la revendication 18, **caractérisé en ce que** ledit châssis (2b,2c) comporte un plateau (20) portant un siège (10) monté sur un support (15), les moyens amortisseurs (16) étant disposés entre ce support et le châssis, et des gouttières (17) pour recevoir les jambes du passager.

22. Chariot (1d) selon la revendication 1, **caractérisé en ce que** ledit châssis (2d) comporte un plateau (25) agencé pour recevoir une personne à mobilité réduite en fauteuil roulant (40), ce plateau (25) étant prolongé par une rampe inclinée (27).

23. Chariot (1e,1f) selon la revendication 1, **caractérisé en ce que** ledit châssis (2e,2f) définit un fauteuil roulant (40), les moyens de préhension (5) pouvant être fixés à l'avant ou à l'arrière dudit châssis.

24. Chariot selon la revendication 23, **caractérisé en ce qu'**il comporte des butées (44) agencées pour former des sécurités anti-basculement arrière dudit chariot (1e,1f).

25. Chariot selon la revendication 1, **caractérisé en ce qu'**au moins ledit timon (4) et/ou les moyens de préhension (5) sont agencés pour être réglables en longueur.
